# EUROPEAN PATENT APPLICATION

(11) **EP 2 700 306 A1**
(43) Date of publication of application: **26.02.2014**
(21) Application number: 13380033.4
(22) Date of filing: 21.08.2013
(51) Int. Cl.: A01K 45/00, A01K 31/00

(54) **Caged fowl catching aid device**

(30) Priority: 23.08.2012 ES 201231326
(71) Applicant: Sanz Álvarez, Pedro Antonio, 43520 Roquetes (Tarragona) (ES)
(72) Inventor: Sanz Álvarez, Pedro Antonio, 43520 Roquetes (Tarragona) (ES)
(74) Representative: Torner Lasalle, Elisabet

(57) **Abstract**

The caged fowl catching aid device comprises an inflatable bag (9) provided with a connection element (10) connectable to a pressurized gas supply source. The inflatable bag (9) is configured so that, in a shrunk state, it can be introduced into the inner space of a cage (50) and then it can be inflated inside said cage (50) by means of pressurized gas introduced through said connection element (10) to an expanded state restricting said inner space of the cage (50) to a reduced unloading space located adjacent to a door (7a) of the cage (50) sized to let one fowl go through.

## Description

### Field of the art

The present invention relates to a caged fowl catching aid device to assist in the catching and of fowl from their cages based on an inflatable bag that is introduced into a cage in a shrunk state and then is inflated by means of pressurized gas in order to reduce the inner space of the cage to a reduced unloading space adjacent to a door of the cage.

### Background of the invention

Fowl cages provided with a bottom wall, side walls and an upper wall, generally made of a grille or a holed sheet, are known with one or more loading and unloading doors through which the fowl are loaded in the cage and unloaded therefrom. In general, the loading of one or more fowl into the cage through one of the doors does not convey any problems, since the birds, once inside the cage, move around and spread comfortably across the inner space thereof.

However, the unloading of the fowl through one of the cage doors constitutes a problem, since the fowl become upset and move towards the corners of the cage away from the door and out of reach of the hand of operator trying to catch them, which to a large extent hinders the operator's task and may cause serious stress to the fowl.

Document US 4380969 A proposes a solution to the unloading problem providing a cage provided with side doors and an apparatus that tilts the cage so that the fowl will slip towards the open side doors and get out therethrough. The apparatus includes an inclined plane positioned so that the fowl that slip out of the cage fall on the inclined plane and slide therealong towards an exit conveyor. This device, however, requires moving the full cages so as to place them on the apparatus and then again moving the empty cages to remove them from the apparatus, which may be acceptable for movable cages, such as, for instance, transport cages for young fowl, but it is unfeasible when fixed cages are involved, such as, for instance, communal cages for egg-laying fowl arranged side by side.

### Disclosure of the invention

The present invention contributes to the solution of the above and other drawbacks by providing a caged fowl catching aid device that comprises an inflatable bag provided with a connection element connectable to a pressurized gas supply source for inflation thereof from a shrink state to an expanded state. This inflatable bag is configured so that, in said shrunk state, it may be introduced into the inner space of a cage occupied by a number of fowl and then it can be inflated inside said cage by means of pressurized gas introduced through said connection element to said expanded state in which the inflatable bag has a volume that allows to restrict said inner space of the cage to a reduced unloading space suitable for catching the fowls from a door of the cage sized to let one fowl go through.

The device of the present invention is especially applicable to a type of fowl cage provided with at least two loading and unloading doors located at or near opposite ends thereof, so that the inflatable bag can be introduced through one of the doors located at the end opposite the door intended for the unloading operation. The inflation of the bag is thus initiated at the end of the cage farthest away from the door intended for the unloading operation and as the inflatable bag expands, it progressively occupies the inner space of the cage until it reduces it to said reduced unloading space adjacent to the door intended for the unloading operation.

Alternatively, and depending on the type of cage, the inflatable bag may be configured so that, in the shrunk state, it can be introduced in the cage through one of the grille openings of one of its wall or through any other opening, even though it is not a door.

The inflatable bag is configured so that, in the shrunk state, it has a reduced volume that does not substantially invade the inner space of the cage, allowing full freedom of movement to a number of fowl therein, whereas, in the expanded state, the inflatable bag has a volume which occupies a large portion of the inner space of the cage, restricting it to the reduced unloading space located adjacent to the door intended for the unloading operation, so that during inflation the bag will push the fowl and gather them, their freedom of movement being restricted, next to the door intended for the unloading operation, thus facilitating that an operator should catch and unload them through the door without the fowl becoming upset.

It is feasible that the inflation of the bag should be carried out in steps based on the number of birds in the cage or even that the inflation should be effected through several points on the bag. This allows the inner space of the cage to be reduced in steps, making it possible to unload a partial number of birds in each step.

Optionally, when the inflatable bag is in its shrunk state, it may be secured by fastening means to one or more walls of the cage, in a suitable position to allow its subsequent expansion to their expanded state.

In one embodiment, when the inflatable bag is in the expanded state, it substantially adopts the shape of a conjugated parallelepiped with the shape of the inner space of the cage, and said parallelepiped has a truncated vertex that provides the reduced unloading space adjacent the door intended for the unloading operation. This truncated vertex is preferably configured to provide the reduced unloading space adjacent a door located at or near a longitudinal end of the cage front wall.

Optionally, said connection element of the inflatable bag may additionally be connected to a suction device for drawing out the gas contained therein and shrinking the bag from the expanded state to the shrunk state. Alternatively, the inflatable bag may have a second connection element connectable to said suction device, in addition to the connection element connectable to the pressurized gas supply source. In general, the inflatable bag is made of an airtight flexible foil material, and said pressurized gas supply source may be an air compressor or a compressed air bottle or cartridge.

The caged fowl catching aid device of the present invention is suitable for a type of cage that farms of egg-laying fowl, such as hens, are nowadays being equipped with, wherein a plurality of such cages is arranged side by side, optionally on several overlaid storeys, wherein each cage has a couple of doors located on opposite ends of a front wall thereof. In such a farm, the inflatable bag of the device of the present invention may be successively introduced, inflated, deflated and removed from a plurality of cages to effect the fowl catching and unloading therefrom.

For the successive inflation and deflation operations, the connection element or elements of the bag may be connected through a system of conduits and valves to a fixed installation of pressurized gas supply and suction, or they may be connected to a portable pressurized gas supply source and suction device.

Said airtight flexible foil material that the inflatable bag is made of has a substantially smooth outer surface and is preferably washable so as to facilitate its multiple reuse in good hygienic conditions. Obviously, the airtight flexible foil material is also resistant to the fowl's pecking.

It is to be understood that the shape and arrangement of the bag are variable according to the model and construction type of the cage and the arrangement thereof within the side-by-side ensemble.

### Brief description of the drawings

The above and other features and advantages will be more apparent from the following detailed description of one embodiment with reference to the attached drawings, wherein:
Fig. 1 is a perspective view of a fowl cage unloading aid device according to an embodiment of the present invention with the inflatable bag in the shrunk state;
Fig. 2 is a perspective view of the device of Fig. 1 with the inflatable bag in the expanded state;
Fig. 3 is a perspective view of a fowl cage unloading aid device according to another embodiment of the present invention with the inflatable bag in the shrunk state;
Fig. 4 is a perspective view showing the inflatable bag of the device of Figs. 1 and 2 being introduced in its shrunk state inside the fowl cage through a door thereof; and
Fig. 5 is a perspective view showing the inflatable bag of the device of Figs. 1 and 2 in its expanded state restricting the inner space of the cage to facilitate the unloading of the fowl through another door of the cage.

### Detailed description of embodiments

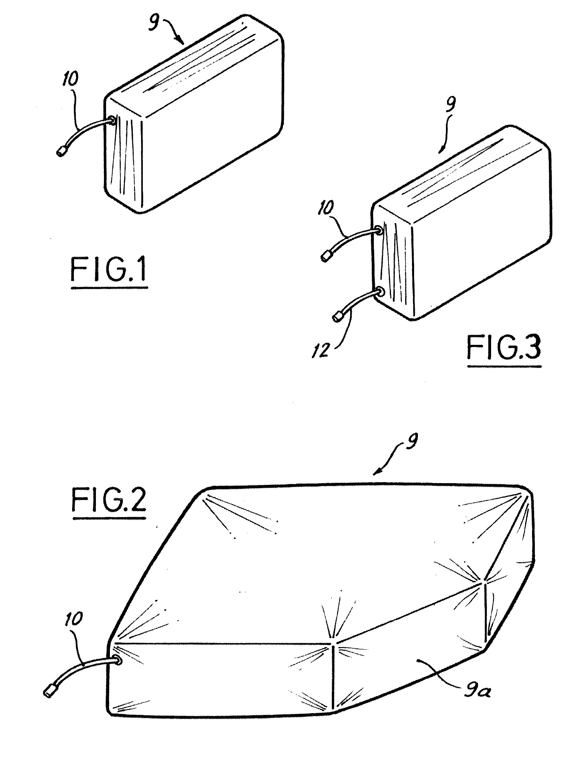

Referring firstly to Figs. 1 and 2, there is shown a caged fowl catching aid device according to one embodiment of the present invention that comprises an inflatable bag 9 provided with a connection element 10 connectable to a pressurized gas supply source (not shown). Said inflatable bag 9 may be in a shrunk state (shown in Fig. 1), wherein it adopts a compacted volume, and it may be inflated by means of pressurized gas introduced through said connection element 10 to an expanded state (shown in Fig. 2), wherein the inflatable bag 9 substantially adopts a volume in the shape of a parallelepiped provided with a truncated vertex 9a.

In order to proceed from the expanded state of Fig. 2 back to the shrunk state of Fig. 1, the connection element 10 may be simply disconnected so as to let the gas contained in the inflatable bag 9 escape therethrough or, once disconnected from the pressurized gas supply source, the connection element 10 may be connected to a suction device (not shown) through which the gas is extracted until the inflatable bag 9 recovers the shrunk state.

The inflatable bag 9 is preferably made of an airtight flexible foil material resistant to the fowl's pecking, and it has a substantially smooth, washable outer surface. Air may be used as the pressurized gas for inflating the bag, although any other gas may also be used.

Fig. 3 shows an alternative embodiment of the device of the present invention wherein the inflatable bag 9 has, in addition to the connection element 10 connectable to the pressurized gas supply source, a second connection element 12 connectable to a suction device. In such a case, both connection elements 10, 12 may be simultaneously connected to the respective supply and suction devices by means of a valve system that allows selecting the actuation of the inflation or the deflation.

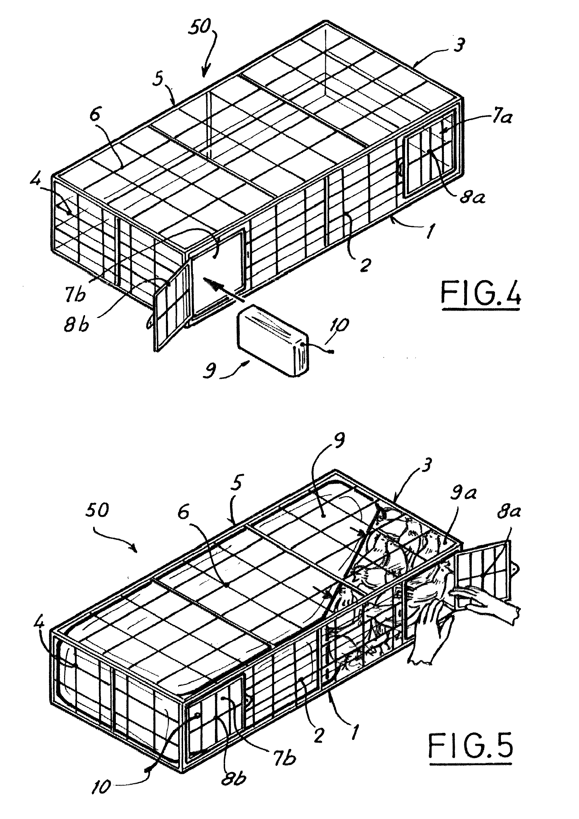

In connection now with Figs. 4 and 5, the operation of the device of the present invention is described, which, in this case, is applied to a conventional fowl cage 50 essentially having a bottom wall 1, side walls 2, 3, 4, 5 and an upper wall 6 that define an inner space substantially in the shape of a parallelepiped. One of said side walls is an elongated-shaped front wall 2 having a couple of doors 7a, 7b located near the opposite ends thereof. Each door 7a, 7b is sized to let one fowl go through and it has one corresponding moving leaf 8a, 8b that permits opening and closing the aperture thereof. The loading and unloading of the fowl are carried out through the doors 7a, 7b.

Another of the side walls of cage 50 is a rear wall 5, which is of dimensions similar to those of the front wall 2 and it may also have one or more loading and unloading doors. The front and rear doors 2, 5 are connected by their ends to a couple of noticeably shorter end walls 3, 4. In general, both the side walls 2, 3, 4, 5 and the bottom and upper walls 1, 6 of the cage 50 and the leaves 8a, 8b of the doors 7a, 7b are made of a grille or a holed sheet.

The inner space of the cage 50 is sized to house with full freedom of movement a number of fowl, for instance up to 60 egg-laying hens. The fowl may be introduced in the inner space of the cage 50 through any of the doors 7a, 7b. The conventional unloading of the fowl through the doors 7a, 7b, however, is extremely difficult, because the birds get upset and move towards corners of the cage away from the door through which they are intended to be caught by an operator.

As shown in Fig. 4, the inflatable bag 9 of the caged fowl catching aid device of the present invention is configured so that, when it is in the shrunk state shown in Fig. 1, it can be introduced in the inner space of the cage 50, for instance through one of its doors 7b, and next it can be inflated inside the cage 50 by means of pressurized gas introduced through the connection element 10 until the bag reaches the expanded state shown in Fig. 2.

Fig. 5 shows the inflatable bag 9 in the expanded state inside the cage 50, wherein the parallelepiped shape of the inflatable bag 9 in the expanded state is substantially conjugated with the shape of the inner space of the cage 50, so that the inflatable bag 9 restricts the inner space of the cage 50 to a reduced unloading space provided by the truncated vertex 9a of the parallelepiped, which is located adjacent to the door 7a that is found at the end of the front wall 2 of the cage 50 opposite the door 7b through which the inflatable bag was introduced.

In this situation, the fowl are gathered, with the freedom of movement restricted inside said reduced unloading space located adjacent to the door 7a intended for the unloading operation, from which an operator can easily catch and remove them through the door 7a.

Alternatively, the inflatable bag 9, in a shrunk state, may be introduced inside the cage 50 through the same door 7a intended for the unloading operation and moved towards the opposite end of the inner space of the cage, or through any other door of the cage, before proceeding to its inflation. To that end, the inflatable bag 9, in the shrunk state, is sized to go through any of the doors 7a and 7b located on opposite ends of the front wall of the cage 50.

When the fowl have been removed from the cage 50, the connection element 10 may be disconnected from the pressurized gas supply source and, next, connected to a suction device for drawing out the gas therefrom until the shrunk state shown in Fig. 1 is reached again. Once the inflatable bag 9 is in its shrunk state, it can be removed from the cage 50, for instance, through the door 7b and it is ready to be used subsequently as catching aid device for unloading fowl from another cage 50.

A person skilled in the art will be able to introduce modifications and variations in the embodiments shown and described without departing from the scope of the present invention as defined in the attached claims.

## Claims

1. A caged fowl catching aid device **characterised by** comprising an inflatable bag (9) provided with a connection element (10) connectable to a pressurized gas supply source for inflation thereof from a shrunk state to an expanded state allowing said inflatable bag (9) in said shrunk state to be introduced into an inner space of a cage (50) occupied by a number of fowl, inflated inside said cage (50) to said expanded state, deflated to the shrunk state and removed from the cage (50), the inflatable bag (9) in the expanded state having a volume which allows to restrict said inner space of the cage (50) to a reduced unloading space suitable for catching the fowl from at least a door (7a) of the cage (50).

2. The device according to claim 1 **characterised in that** said connection element (10) is, in addition, connectable to a suction device.

3. The device according to claim 1 **characterised in that** the inflatable bag (9) is provided with a second connection element (12) connectable to a suction device.

4. The device according to claims 1, 2 or 3 **characterised in that** the inflatable bag (9), in a shrunk state, is sized to go through said first door (7a) or through a second door (7b) located at an end of the cage (50) opposite the first door (7a).

5. The device according to claims 1, 2 or 3 **characterised in that** the inflatable bag (9), in said expanded state, substantially adopts the shape of a conjugated parallelepiped with the shape of the inner space of the cage (50) and provided with a truncated vertex (9a) that provides said reduced unloading space located adjacent to a door (7a) intended for the unloading of the cage (50).

6. The device according to claim 5 **characterised in that** said truncated vertex (9a) is configured to provide the reduced unloading space located adjacent to a door (7a) located at or near a longitudinal end of a front wall (2) of the cage (50).

7. The device according to any one of the preceding claims **characterised in that** the inflatable bag (9) is sized so that, when it is inside the cage (50) in the shrunk state, it allows full freedom of movement to a number of fowl in the inner space of the cage (50), and, in the expanded state, it restricts the freedom of movement to the same number of fowl in the reduced unloading space.

8. The device according to any one of the preceding claims **characterised in that** the inflatable bag (9) is made of an airtight flexible foil material.

9. The device according to claim 8 **characterised in that** said airtight flexible foil material that the inflatable bag (9) is made of has a substantially smooth, washable outer surface.

10. The device according to claim 8 **characterised in that** the inflatable bag (9) is made of a flexible foil material resistant to the fowl's pecking.
